**Europäisches Patentamt**

**European Patent Office**

**Office européen des brevets**

(19)

(11) Numéro de publication: **0 140 769**
**B1**

(12)  # FASCICULE DE BREVET EUROPEEN

(45) Date de publication du fascicule du brevet:
**07.01.88**

(21) Numéro de dépôt: **84402010.7**

(22) Date de dépôt: **08.10.84**

(51) Int. Cl.⁴: **B 04 C 3/00,** B 04 C 9/00,
B 01 J 8/00, B 01 D 45/12

(54) Installation de traitement de matière en lit fluidisé.

(30) Priorité: **07.10.83 FR 8315970**

(43) Date de publication de la demande:
**08.05.85 Bulletin 85/19**

(45) Mention de la délivrance du brevet:
**07.01.88 Bulletin 88/1**

(84) Etats contractants désignés:
**AT BE CH DE FR GB IT LI LU NL SE**

(56) Documents cités:
**BE - A - 334 250**
**DE - A - 1 507 855**
**GB - A - 680 297**
**GB - A - 1 593 520**
**US - A - 1 724 041**
**US - A - 2 709 501**
**US - A - 3 977 850**
**US - A - 3 977 850**
**US - A - 3 985 526**
**US - A - 4 206 174**

(73) Titulaire: **CREUSOT-LOIRE, 42 rue d'Anjou,**
**F-75008 Paris (FR)**

(72) Inventeur: **Chrysostome, Gérard, 7 rue de Nevers,**
**F-71200 Le Creusot (FR)**
Inventeur: **Wang, Robert, 33 avenue Eric Morlet,**
**F-91320 Wissous (FR)**

(74) Mandataire: **Bressand, Georges et al, c/o CABINET**
**LAVOIX 2 Place d'Estienne d'Orves, F-75441 Paris**
**Cedex 09 (FR)**

## Description

L'invention a pour objet une installation de traitement de matière en lit fluidisé.

On connaît depuis longtemps des installations de traitement en lit fluidisé par exemple pour la calcination de matière minérale ou bien la combustion ou la gazéification de matière combustible. De telles installations comprennent une chambre de fluidisation constituée d'une enceinte allongée à axe vertical, alimentée en matière à taiter sous forme granulaire et munie à sa base de moyens d'injection et de répartition d'un gaz pour former un courant ascendant susceptible de mettre la matière en fluidisation. Le gaz de fluidisation et les gaz résultant du traitement, par exemple des gaz de combustion, sont évacués à la partie supérieure de la chambre de fluidisation vers un dispositif de séparation fonctionnant souvent par effet centrifuge et permettant de récupérer les particules solides entraînées avec les gaz. Celles-ci peuvent être constituées de particules fines telles que des cendres mais, si la vitesse de fluidisation est supérieure à une certaine limite, une partie importante de la matière peut également être entraînée avec les gaz, le lit fluidisé fonctionnant alors en régime dit circulant. Les particules sont récupérées dans le dispositif de séparation centrifuge qui comprend une sortie des gaz épurés et une sortie des particules récupérées qui peuvent être réintroduites dans le lit fluidisé par un circuit de recyclage.

Généralement, le dispositif de séparation est du type à cyclone et comprend donc une ou plusieurs chambres munies à leur partie supérieure d'une entrée tangentielle des gaz chargés de particules et d'une cheminée axiale d'évacuation des gaz épurés et, à sa partie inférieure, d'un fond en forme de trémie de récupération des particules qui est relié à la base de la chambre de fluidisation par une conduite de recyclage.

Une telle installation est relativement encombrante. En outre, la jonction entre la chambre de fluidisation et la chambre de séparation détermine des changements de direction et des zones de refroidissement qui peuvent favoriser des dépôts de matière condensable.

On connaît également dans le GB-A-1 593 520 une installation de traitement de matière en lit fluidisé, comprenant une chambre de fluidisation allongée à axe vertical, alimentée en matière à traiter sous forme de particules et munie à sa base de moyens de formation d'un courant ascendant de gaz de fluidisation à une vitesse susceptible d'entraîner au moins une partie des particules vers la partie supérieure de la chambre de fluidisation, celle-ci étant reliée à un dispositif de séparation par effet centrifuge placé au-dessus et centré sur l'axe de la chambre de fluidisation comportant une sortie des gaz épurés et une sortie des particules récupérées.

Conformément à l'invention, le dispositif de séparation est constitué de deux chambres cylindriques coaxiales placées au-dessus et centrées sur l'axe de la chambre de fluidisation, respectivement une chambre centrale de séparation limitée par une paroi latérale cylindrique munie dans sa partie médiane et sur tout son pourtour d'une ouverture circulaire d'évacuation des particules et une chambre annulaire de récupération entourant ladite ouverture circulaire, fermée à sa partie supérieure et munie à sa partie inférieure de moyens, étanches aux faz d'évacuation des particules récupérées, la partie inférieure de la chambre de séparation formant une chambre d'alimentation munie de moyens d'injection tangentielle des gaz venant de la chambre de fluidisation sous forme d'au moins un jet mince et plat susceptible de former un courant tourbillonnaire en couche mince remontant en restant collé le long de la paroi latérale jusqu'à l'ouverture circulaire sans pénétrer dans la chambre annulaire, puis, après épuration jusqu'à un conduit axial d'aspiration placé à la partie supérieure de la chambre de séparation.

Dans un mode de réalisation préférentiel, la chambre annulaire de récupération est prolongée au-dessous de la chambre de séparation par une partie inférieure coiffant la partie supérieure de la chambre de fluidisation et munie d'un fond incliné formant au moins une trémie de guidage des particules récupérées vers au moins un orifice de sortie relié par une conduite d'évacuation, placée le long de la paroi latérale de la chambre de fluidisation, à des moyens de recyclage dans le lit fluidisé de particules récupérées.

Dans un premier mode de réalisation de l'invention, la partie supérieure de la chambre de fluidisation est prolongée par au moins une conduite d'évacuation des gaz chargés de particules débouchant tangentiellement, par une entrée en volute, dans la chambre d'alimentation, cette dernière comprenant une partie inférieure d'injection des gaz, fermée vers le bas et limitée par une paroi cylindrique de diamètre inférieur à celui de la paroi latérale de la chambre de séparation et une partie supérieure évasée s'ouvrant vers le haut pour se raccorder au bord inférieur de la paroi latérale de la chambre de séparation.

Dans un second mode de réalisation avantageux, la partie supérieure de la chambre de fluidisation entoure la chambre d'alimentation placée à la base du dispositif de séparation de façon à former un diffuseur annulaire communiquant avec la chambre d'alimentation par une pluralité de fentes allongées sensiblement parallèles à l'axe et placées à la sortie de canaux de guidage des gaz suivant des directions tangentes à la face interne de la chambre d'alimentation.

Mais l'invention sera mieux comprise par la description détaillée de ces deux modes de réalisation, donnés à titre d'exemples non limitatifs, et représentés sur les dessins annexés.

La figure 1 est une vue en coupe axiale d'un premier mode de réalisation de l'invention.

La figure 2 est une vue de dessus en coupe transversale selon II-II de la figure 1.

La figure 3 est une vue en coupe axiale d'un second mode de réalisation de l'invention.

La figure 4 est une vue de dessus, en coupe axiale, selon IV-IV de la figure 3.

La figure 5 est une vue de détail, à échelle agrandie, de moyens d'injection des gaz dans la chambre d'alimentation.

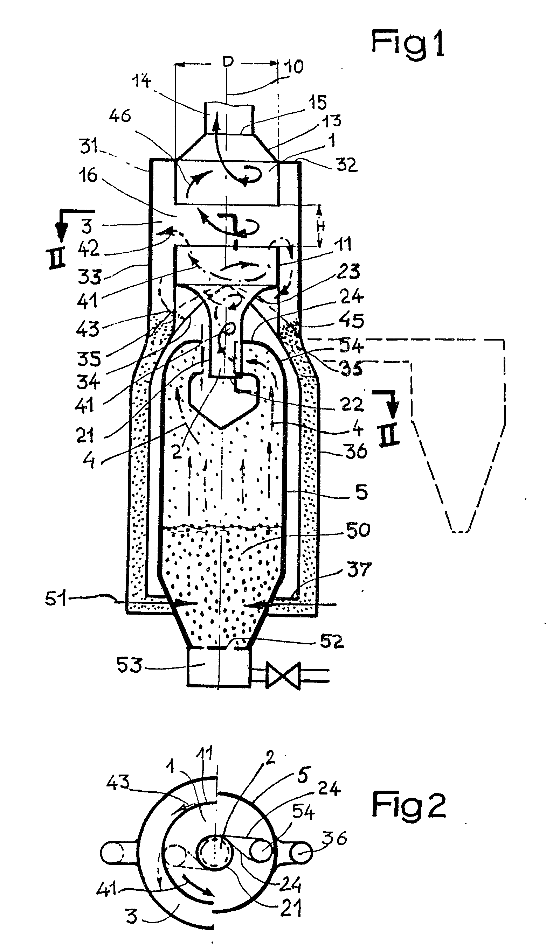

Sur la figure 1, on a représenté, à titre d'exemple, un premier mode de réalisation de l'installation selon l'invention, qui comprend une chambre de traitement 5 constituée d'une enceinte allongée à axe vertical et alimentée en matière granulaire à traiter par des moyens symbolisés par la flèche 51. L'enceinte allongée 5 est munie à sa partie inférieure de moyens de formation d'un lit fluidisé 50, comprenant par exemple une grille 52 de répartition d'un gaz de fluidisation introduit dans une chambre inférieure 53 avec un débit variable.

Bien entendu, on peut utiliser toutes sortes de dispositions bien connues pour assurer la formation du lit fluidisé 50. De même, si la matière est soumise à un traitement de combustion ou de gazéification, le gaz de fluidisation peut être constitué par le gaz comburant mais on peut aussi injecter séparément un gaz de fluidisation au-dessous de la charge et un gaz comburant à l'intérieur de celle-ci.

La matière à traiter peut, de la même façon, soit constituer à elle seule la charge de matière mise en fluidisation, soit être associée à des particules neutres destinées à constituer un support.

Dans tous les cas, l'enceinte de fluidisation 5 est parcourue par un courant ascendant de gaz constitué en partie des gaz de fluidisation injectés dans la chambre inférieure 53 et en partie par des gaz formés par le traitement, par exemple des gaz de combustion. Selon la vitesse ascendante de ces gaz et la granulométrie de la matière, une partie plus ou moins importante de celle-ci est entraînée vers le haut avec les gaz. On sait, en effet, qu'il est possible, dans un lit fluidisé, de définir une vitesse critique de fluidisation à partir de laquelle non seulement les cendres fines mais également la plus grande partie de la matière est entraînée vers le haut de la chambre de fluidisation 5 puis, après séparation, recyclée dans le lit fluidisé, ce dernier fonctionnant alors en régime circulant.

Dans tous les cas, il est nécessaire d'épurer les gaz sortant de la chambre de fluidisation avant leur rejet à l'atmosphère. C'est pourquoi, la chambre de fluidisation est reliée par sa partie supérieure à un dispositif d'épuration constitué souvent d'un séparateur statique du genre cyclone.

Jusqu'à présent, comme on l'a représenté en pointillés sur la figure 1, on avait l'habitude de placer un ou plusieurs cyclones autour de la chambre de fluidisation avec laquelle ils étaient reliés par des conduits coudés. De ce fait, l'installation couvrait au sol une surface relativement importante.

Conformément à l'invention, le dispositif de séparation est placé au-dessus de la chambre de fluidisation 5 et il est constitué à cet effet de deux chambres coaxiales centrées sur l'axe 10 de la chambre de fluidisation 5, respectivement une chambre de séparation 1 et une chambre annulaire de récupération 3, la chambre de séparation 1 étant munie à sa base d'une chambre d'alimentation 2 qui est mise en communication directement avec la partie supérieure de la chambre de fluidisation 5.

La chambre de séparation 1 est séparée de la chambre de récupération 3 par une paroi latérale cylindrique 11 et elle est fermée à sa partie inférieure par la chambre d'alimentation 2 et à sa partie supérieure par un fond supérieur 13 qui se raccorde à un orifice central 15 débouchant dans une conduite 14 reliée, par exemple, à un ventilateur aspirant.

Dans le mode de réalisation représenté sur la figure 1, la chambre d'alimentation 2 comprend une partie inférieure fermée par un fond inférieur 22 et limitée par une paroi latérale cylindrique 21 de diamètre très inférieur à celui de la chambre de séparation 1 et une paroi supérieure 23 qui s'ouvre en s'évasant vers le haut, en forme de pavillon, pour se raccorder au bord inférieur de la paroi latérale 11 de la chambre de séparation 1.

A sa partie supérieure, la chambre de fluidisation 5 est prolongée par une ou plusieurs conduites d'évacuation 54 qui débouchent chacune à l'intérieur de la chambre d'alimentation 2 par une volute d'entrée 24.

Selon une autre caractéristique essentielle de l'invention, la paroi latérale 11 de l'enceinte 1 est munie dans sa partie médiane, entre la chambre d'alimentation 2 et le fond supérieur 13, d'une ouverture circulaire 16 qui s'étend sur toute sa périphérie et débouche dans la chambre annulaire 3 qui l'entoure complètement.

La chambre 3, limitée par une paroi cylindrique 31 centrée sur l'axe 10, est fermée vers le haut par un fond supérieur 32 et prolongée vers le bas par une partie inférieure 33 formant au moins une trémie de récupération des particules.

A titre d'exemple, sur la figure 1, la partie inférieure 33 de la chambre annulaire 3 est fermée par un fond circulaire 34 incliné suivant quatre pentes de guidage des particules vers deux orifices de sortie 35 placés de part et d'autre de la chambre de fluidisation 5. Chaque orifice 35 débouche dans une conduite d'évacuation 36 qui descend le long de la paroi latérale de la chambre de fluidisation jusqu'à des moyens 37 fonctionnant de façon connue pour réintroduire les particules récupérées à l'intérieur du lit fluidisé 50.

Sur la figure 1, on a représenté schématiquement, par des flèches le trajet du gaz et des particules. Chaque volute d'entrée 24 est alimentée par un courant 4 de gaz chargé de particules, symbolisé par une flèche en traits mixtes. Le courant gazeux pénètre tangentiellement dans la chambre tubulaire 2 dont le diamètre est inférieur à celui de l'enceinte cylindrique 1, par exemple de l'ordre de la moitié de ce dernier. En pénétrant dans la chambre 2, le courant 4 de gaz chargé de particules forme donc un tourbillon 41 tournant à grande vitesse et qui remonte dans l'enceinte 1 pour être aspiré par la conduite 14. Du fait de sa grande vitesse, le courant tourbillonnaire 41 remonte en spirale en restant collé le long de la face interne du pavillon 23 et de la paroi latérale 11 grâce au phénomène connu sous le nom d'effet COANDA. Le rayon de giration du tourillon augmente donc progressivement et la vitesse initiale de rotation à l'entrée dans la chambre annulaire tubulaire 2 doit donc être calculée de façon à rester suffisante à l'intérieur de l'enceinte 1 pour maintenir le courant gazeux en couche mince le long de la paroi latérale 11. En pratique, cette vitesse peut être de l'ordre de 30 à 50 m/s.

Lorsque le courant tourbillonnaire 41 arrive à la hauteur de l'ouverture circulaire 16, les particules solides ou liquides entraînées en rotation avec le courant gazeux sont éjectées latéralement vers l'extérieur de l'enceinte en suivant des trajets symbolisés sur les figures par les flèches 42. Les particules solides pénètrent ainsi dans la chambre annulaire 3 où elles sont récupérées et descendent en suivant un trajet en spirale inversée 43 dans la partie inférieure 33 pour s'accumuler dans le fond 35 en forme de trémie, d'où elles sont évacuées par la conduite 36. Celle-ci peut être fermée par exemple par un sas ou bien, simplement, par une masse de particules accumulées 45. Il en résulte que la chambre annulaire 3 forme un espace étanche au gaz qui reste calme et à l'intérieur duquel le courant gazeux ne peut pénétrer et continue, de ce fait, à remonter le long de la paroi latérale 11 en suivant un trajet 46 en spirale de même diamètre jusqu'au fond supérieur 13 de l'enceinte qui débouche dans le conduit 14 d'aspiration des gaz ainsi épurés.

On peut ainsi comparer le fonctionnement du dispositif selon l'invention avec celui d'un cyclone axial. Comme dans le cyclone axial, on forme un courant gazeux tourbillonnaire entre les deux extrémités amont et aval d'une enceinte cylindrique. Cependant, dans le cyclone axial, le courant gazeux, mis en rotation par des aubages, remplit la totalité de l'enceinte et les particules solides sont éjectées dès l'entrée dans l'enceinte en s'écartant progressivement de l'axe de telle sorte que, pour que les particules solides soient récupérées par une ouverture circulaire entourant l'extrémité de sortie de l'enceinte cylindrique, il faut donner à celle-ci une longueur L importante par rapport à son diamètre D, le rapport L/D étant déterminé de façon bien précise.

Au contraire, dans le dispositif selon l'invention, les particules sont mises en rotation avec les gaz pendant toute la première partie de leur trajet en spirale, l'ensemble restant collé en couche mince le long de la paroi latérale et la séparation s'effectue dans la partie médiane de celle-ci alors que les gaz épurés continuent leur trajet vers le haut. Il en résulte que le rapport L/D peut être plus faible, la longueur L devant, en pratique, être seulement un peu plus importante que le diamètre D. D'autre part, la hauteur H de l'ouverture circulaire 16 doit être simplement assez grande pour permettre l'éjection de toutes les particules solides avant que le courant gazeux ne parvienne dans la partie supérieure de l'enceinte cylindrique 1. On notera également que, la chambre de récupération 3 étant étanche au gaz, le débit gazeux est évacué en totalité par la conduite d'aspiration 14 et il n'est pas nécessaire d'introduire un débit auxiliaire de gaz porteur.

On voit que la disposition selon l'invention permet de réaliser une installation dont l'emprise au sol est très réduite par rapport aux installations classiques. Certes, l'installation est plus haute, mais, généralement, l'encombrement en hauteur est moins gênant que l'encombrement en largeur.

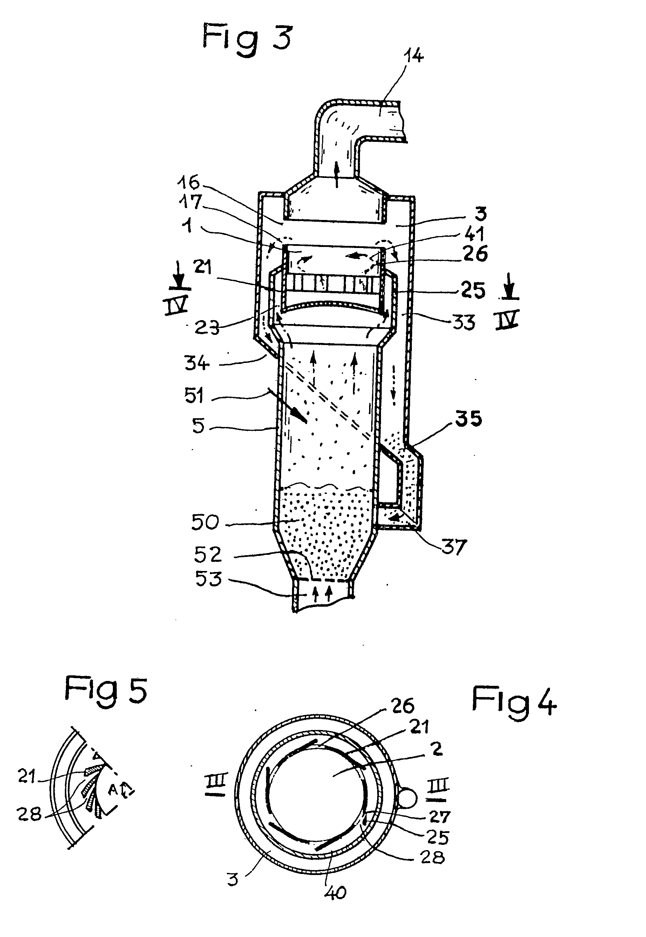

Par ailleurs, il est possible de réduire également la hauteur de l'installation si on utilise un mode de réalisation tel que celui qui a été représenté sur la figure 3.

Dans ce cas, en effet, la paroi cylindrique 21 de la chambre d'alimentation 2 a un diamètre égal à celui de la paroi latérale 11 de l'enceinte de séparation 1 et est donc placée dans le prolongement de celle-ci. La chambre 2 est fermée, du côté opposé à l'enceinte, par un fond 22 et elle est entourée par un diffuseur annulaire 25 dans lequel débouche la conduite d'alimentation 23.

Le diffuseur 25 communique avec la chambre d'alimentation 2 par une série d'ouvertures 26 régulièrement réparties autour de l'axe et placées à la sortie de canaux 28 de guidage des gaz qui débouchent à l'intérieur de la chambre d'alimentation 2 suivant des directions sensiblement tangentes à la face intérieure de la paroi cylindrique 21 de la chambre 2.

Comme on l'a représenté sur la figure 4, les canaux 28 peuvent être limités par des parois 27 sensiblement tangentes à la paroi cylindrique 21 et s'écartant vers l'extérieur dans le diffuseur annulaire 25, les ouvertures 26 ayant la forme de fentes allongées, sensiblement parallèles à l'axe. Mais les canaux 28 peuvent aussi être ménagés dans l'épaisseur de la paroi cylindrique 21 si celle-ci est appréciable, comme on l'a représenté en détail sur la figure 5.

La chambre de récupération 3 est prolongée vers le bas par un fond en forme de trémie annulaire 33 qui coiffe la partie supérieure de la chambre de fluidisation 5 et est fermée par une paroi inclinée 34 de guidage des particules vers un orifice inférieur 35 placé à l'entrée d'une conduite d'évacuation 36 qui alimente des moyens de recyclage 37 débouchant à l'intérieur du lit fluidisé 50.

Le gaz chargé de particules monte à l'intérieur de la chambre de fluidisation 5 jusqu'à la chambre annulaire 25 et pénètre dans la chambre 2 par les ouvertures 26 en formant un ensemble de jets minces insufflés vers l'intérieur de la chambre 2 dans des directions sensiblement tangentes à la paroi interne de celle-ci et formant ainsi un courant tourbillonnaire en couche mince 41 qui reste collé et remonte en spirale le long de la face interne de la paroi latérale 11 jusqu'à l'ouverture circulaire 16. Dès que le bord inférieur 17 de celle-ci est dépassé, les particules solides sont projetées latéralement, selon les flèches 42, vers la chambre annulaire 3 et descendent à l'intérieur de celle-ci en suivant un mouvement en spirale 51 jusqu'au fond en forme de trémie 33 où elles se rassemblent en 35, le gaz épuré continuant à remonter en tourbillon à l'intérieur de l'enceinte 1 jusqu'à la cheminée d'évacuation 14.

Dans la disposition selon l'invention, le dispositif de séparation constitue donc un simple prolongement du réacteur à lit fluidisé dont il conserve la largeur sans augmenter sensiblement l'encombrement en hauteur. Les gaz chargés de particules pénètrent directement dans la chambre d'alimentation du séparateur sans changement brusque de direction et sans risque de pertes calorifiques qui pourraient provoquer des dépôts de matière condensable. Les particules récupérées qui se rassemblent à la partie inférieure annulaire de la chambre de récupération descendent le long de la paroi latérale du réacteur et cette disposition permet également de diminuer les pertes calorifiques, l'ensemble pouvant être facilement isolé.

Bien entendu, l'invention ne se limite pas aux détails des deux modes de réalisation qui viennent d'être décrits, d'autres dispositions pouvant être imaginées en appliquant les caractéristiques revendiquées. C'est ainsi que, selon un autre avantage de l'invention, grâce à sa compacité, l'ensemble de l'installation comportant le réacteur et le séparateur pourrait assez facilement être placée à l'intérieur d'une enceinte unique résistant à la pression. Cette disposition pourrait être particulièrement avantageuse dans les cas où le lit fluidisé doit fonctionner sous pression.

Enfin, il est bien évident que les séparateurs selon l'invention pourraient être complétés par des dispositifs particuliers faisant appel à d'autres principes d'action sur les particules, notamment l'agglomération préliminaire, par exemple sonique ou bien la précipitation électrostatique.

## Revendications

1. Installation de traitement de matière en lit fluidisé, comprenant une chambre de fluidisation allongée (5) à axe vertical, alimentée en matière à traiter sous forme de particules et munie à sa base de moyens (53) de formation d'un courant ascendant de gaz de fluidisation à une vitesse susceptible d'entraîner au moins une partie des particules vers la partie supérieure de la chambre de fluidisation (5), celle-ci étant reliée à un dispositif de séparation par effet centrifuge placé au-dessus et centré sur l'axe de la chambre de fluidisation comportant une sortie des gaz épurés et une sortie des particules récupérées, caractérisée par le fait que le dispositif de séparation est constitué de deux chambres cylindriques coaxiales placées au-dessus et centrées sur l'axe de la chambre de fluidisation, respectivement une chambre centrale de séparation (1) limitée par une paroi latérale cylindrique (11) munie dans sa partie médiane et sur tout son pourtour d'une ouverture circulaire (16) d'évacuation des particules et une chambre annulaire de récupération (3) entourant ladite ouverture circulaire (16), fermée à sa partie supérieure et munie à sa partie inférieure de moyens (35), étanches aux gaz, d'évacuation des particules récupérées, la partie inférieure de la chambre de séparation (1) formant une chambre d'alimentation (2) munie de moyens (23, 26) d'injection tangentielle des gaz venant de la chambre de fluidisation (5) sous forme d'au moins un jet mince et plat susceptible de former un courant tourbillonnaire en couche mince (41) remontant en restant collé le long de la paroi latérale (11) jusqu'à l'ouverture circulaire (16) sans pénétrer dans la chambre annulaire (3), puis, après épration jusqu'à un conduit axial d'aspiration (14) placé à la partie supérieure de la chambre de séparation (1).

2. Installation de traitement de matière selon la revendication 1, caractérisée par le fait que la chambre annulaire de récupération (3) est prolongée au-dessous de la chambre de séparation par une partie inférieure (33) coiffant la partie supérieure de la chambre de fluidisation (5).

3. Installation de traitement de matière selon la revendication 2, caractérisée par le fait que la partie inférieure (33) de la chambre annulaire de récupération est munie d'un fond incliné (34) formant au moins une trémie de guidage des particules vers au moins un orifice de sortie (35) relié par une conduite d'évacuation (36), placée le long de la paroi latérale de la chambre de fluidisation (5), à des moyens (37) de recyclage dans le lit fluidisé (50) des particules récupérées.

4. Installation de traitement de matière selon la revendication 1, caractérisée par le fait que la partie supérieure de la chambre de fluidisation (5) est prolongée par au moins une conduite (54) d'évacuation des gaz chargés de particules débouchant tangentiellement, par une entrée en volute (24), dans la chambre d'alimentation (2), cette dernière comprenant une partie inférieure d'injection des gaz, fermée vers le bas, et limitée par une paroi cylindrique (21) de diamètre inférieur à celui de la paroi latérale (11) de la chambre de séparation (1) et une partie supérieure évasée (23) s'ouvrant vers le haut pour se raccorder au bord inférieur de la paroi latérale (11) de la chambre de séparation (1).

5. Installation de traitement de matière selon la revendication 1, caractérisée par le fait que la partie supérieure de la chambre de fluidisation (5) entoure la chambre d'alimentation (2) placée à la base du dispositif de séparation (1) de façon à former un diffuseur annulaire (25) communiquant avec la chambre d'alimentation (2), par une pluralité de fentes allongées (26) sensiblement parallèles à l'axe et placées à la sortie de canaux (28) de guidage des gaz suivant des directions tangentes à la face interne de la chambre d'alimentation (2).

6. Installation de traitement de matière selon la revendication 5, caractérisée par le fait que les fentes allongées (26) d'entrée des gaz sont ménagées entre les extrémités internes de parois de guidage (27) se raccordant tangentiellement à la face interne de la chambre d'alimentation (2) et s'écartant l'une de l'autre vers le diffuseur annulaire (25) pour former les canaux (28) de guidage des gaz.

7. Installation de traitement de matière selon la revendication 5, caractérisée par le fait que les canaux (28) de guidage des gaz sont ménagés dans l'épaisseur de la paroi latérale (21) de la chambre d'alimentation (2).

## Patentansprüche

1. Vorrichtung zur Behandlung von Material im Wirbelbett mit einer länglichen Wirbelkammer (5) mit senkrechter Achse, die mit dem zu behandelnden Material in Teilchenform beschickt wird und am Boden mit Vorrichtungen (53) zur Bildung eines aufsteigenden Wirbelgasstroms ausgerüstet ist, der eine solche Geschwindigkeit aufweist, dass mindestens ein Teil der Teilchen zum oberen Bereich der Wirbelkammer (5) mitgenommen wird, wobei die Wirbelkammer (5) mit einer oben angeordneten und auf der Achse der Wirbelkammer zentrierten Zentrifugaltrennvorrichtung mit einem Auslass für die Abgase und einem Auslass für die gewonnenen Teilchen verbunden ist, dadurch gekennzeichnet, dass die Trennvorrichtung aus zwei oben angeordneten, auf der Achse der Wirbelbettkammer zentrierten, koaxialen zylindrischen Kammern bzw. einer zentralen Trennkammer (1) besteht, die durch eine zylindrische Seitenwand (11) begrenzt ist, in ihrem Mittelteil und ihrem Umfang eine runde Öffnung (16) zum Ablass der Teilchen und eine ringförmige Wiedergewinnungskammer (3) um diese runde Öffnung (16) aufweist, in ihrem oberen Teil verschlossen und in ihrem unteren Teil mit gasundurchlässigen Vorrichtungen (35) zum Ablass der wiedergewonnenen Teilchen ausgerüstet ist, ihr unterer Teil eine Versorgungskammer (2) bildet, die mit Vorrichtungen (23, 26) zur tangentiellen Injektion der aus der Wirbelkammer (5) kommenden Gase in Form mindestens eines solchen dünnen und flachen Stroms ausgerüstet ist, dass ein Wirbelstrom in dünner Schicht (41) entsteht, der entlang der Seitenwand (11) bis zur runden Öffnung (16), ohne in die ringförmige Kammer (3) einzudringen und nach Reinigung bis zu einem axialen, im oberen Teil der Trennkammer (1) vorhandenen Abzugsrohr (14) aufsteigt.

2. Vorrichtung zur Behandlung von Material nach Anspruch 1, dadurch gekennzeichnet, dass die ringförmige Wiedergewinnungskammer (3) unterhalb der Trennkammer durch einen unteren Teil (33), der auf dem oberen Teil der Wirbelkammer (5) liegt, verlängert ist.

3. Vorrichtung zur Behandlung von Material nach Anspruch 2, dadurch gekennzeichnet, dass der untere Teil (33) der ringförmigen Wiedergewinnungskammer mit einem geneigten Boden (34) ausgerüstet ist, der mindestens einen Leittrichter für die Teilchen zu mindestens einer Auslassöffnung (35) bildet, die über eine Ablassleitung (36) entlang der Seitenwand der Wirbelkammer (5) zu Vorrichtungen (37) zur Rückführung der gewonnenen Teilchen in das Wirbelbett (50) verbunden ist.

4. Vorrichtung zur Behandlung von Material nach Anspruch 1, dadurch gekennzeichnet, dass der obere Teil der Wirbelkammer (5) verlängert ist durch mindestens eine Ablassleitung (54) für die mit tangentiell ankommenden Teilchen beladenen Gase und einen spiralförmigen Einlass (24) in die Versorgungskammer (2), die aus einem unteren, nach unten geschlossenen Gasinjektionsteil, der durch eine Zylinderwand (21) mit einem Durchmesser kleiner als der der Seitenwand der Trennkammer (1) besteht, und einem oberen, sich ausweitenden, sich nach oben öffnenden Teil begrenzt ist, der mit dem unteren Rand der Seitenwand (11) der Trennkammer (1) verbunden ist.

5. Vorrichtung zur Behandlung von Material nach Anspruch 1, dadurch gekennzeichnet, dass der obere Teil der Wirbelkammer (5) die Versorgungskammer (2) umgibt, die sich am Boden der Trennvorrichtung befindet, so dass sie einen ringförmigen Verteiler bildet, der mit der Versorgungskammer (2) über viele längliche Schlitze (26) verbunden ist, die im wesentlichen zur Achse parallel sind und am Ausgang der Leitkanäle (28) für die der inneren Fläche der Versorgungskammer (2) entlangstreichenden Gase angeordnet sind.

6. Vorrichtung zur Behanldung von Material nach Anspruch 5, dadurch gekennzeichent, dass die länglichen Gaseinlasschlitze (26) zwischen den äusseren Enden der Leitwände (27) angeordnet sind, die tangentiell mit der Innenfläche der Versorgungskammer (2) verbunden sind und voneinander zum ringförmigen Verteiler abweichen, um die Gasleitkanäle (28) zu bilden.

7. Vorrichtung zur Behanldung von Material nach Anspruch 5, dadurch gekennzeichnet, dass die Gasleitkanäle (28) in der Seitenwand (21) der Versorgungskammer (2) angeordnet sind.

**Claims**

1. Installation for processing material in a fluidized bed, comprising a elongated fluidization chamber (5) with a vertical axis, supplied with material to be treated in the form of particles and provided at its base with means (53) for the formation of a rising current of fluidization gas at a speed which can entrain at least part of the particles towards the upper part of the fluidization chamber (5), the latter being connected to a device for separation by centrifugal effect placed above and centred on the axis of the fluidization chamber comprising an outlet for the purified gases and an outlet for the recovered particles, characterized by the fact that the separation device is constituted by two coaxial cylindrical chambers placed above and centered on the axis of the fluidization chamber, respectively a central separation chamber (1) bounded by a cylindrical side wall (11) provided in its middle part and over its whole periphery with a circular aperture (16) for removing the particles and an annylar recovery chamber (3) surrounding said circular aperture (16), closed at its upper part and provided at its lower part with means (35), fluid tight to gases, for evacuating the recovered particles, the lower part of the separation chamber (1) forming a supply chamber (2) provided with means (23, 26) for tangential injection of gases coming from the fluidization chamber (5), in the form of at least one thin and flat jet which can form a vortex current in a thin layer (41) reascending whilst remaining adherent along the side wall (11) as far as the circular aperture (16) without entering the annular chamber (3), then, after purification up to an axial aspiration duct (14) placed at the upper part of the separation chamber (1).

2. Installation for processing a material according to claim 1, characterized by the fact that the annular recovery chamber (3) is extended below the separation chamber by a lower part (33) capping the upper part of the fluidization chamber (5).

3. Installation for processing material according to claim 2, characterized by the fact that the lower part (33) of the annular recovery chamber is provided with an inclined bottom (34) forming at least one guide hopper for the particles towards at least one outlet orifice (35) connected by an evacuation duct (36), placed along the side wall of the fluidization chamber (5), to means (37) for recycling into the fluidized bed (50) the recovered particles.

4. Installation for processing material according to claim 1, characterized by the fact that the upper part of the fluidization chamber (5) is prolongated by at least one duct (54) for removing gases charged with particles opening tangentially, trough a helical inlet (24), into the supply chamber (2), the latter comprising a lower part for injecting gases, chlosed downwards, and bounded by a cylindrical wall (21) of diameter smaller than the of the side wall (11) of the separation chamber (1) and a flared upper part (23) opening upwards to be connected to the lower edge of teh side wall (11) of the separation chamber (1).

5. Installation for processing material according to claim 1, characterized by the fact that the upper part of the fluidization chamber (5) surrounds the supply chamber (2) placed at the base of the separation devices (1) so as to form an annular diffuser (25) communicating with the supply chamber (2), through a plurality of elongated slots (26) substantially parallel to the axis and placed at the outlet of channels (28) for guiding the gases along directions tangential to the inner surface of the supply chamber (2).

6. Installation of processing material according to claim 1, characterized by the fact that the elongated slots (26) for the inlet of the gases are arranged between the inner ends of guide walls (27) connecting tangentially with the inner surface of the supply chamber (2) and separating from one another towards the annular diffuser (25) to form channels (28) for guiding the gases.

7. Installation for processing material according to claim 5, characterized by the fact that the channels (28) for guiding the gases are supply chamber (2).

Fig 1

Fig 2

9

# Fig 3

# Fig 5

# Fig 4